# EUROPÄISCHE PATENTSCHRIFT

(11) **EP 0 337 142 B1**
(45) Veröffentlichungstag und Bekanntmachung des Hinweises auf die Patenterteilung: **29.12.1993**
(21) Anmeldenummer: 89104634.4
(22) Anmeldetag: 15.03.1989
(51) Int. Cl.: G02B 6/42, G02B 6/32, G02B 6/36

(54) **Halterung einer Kugellinse in einem Metallröhrchen, insbesondere für optoelektronische Module, und Verfahren zu ihrer Herstellung**
Holding of a ball lens in a metal tube, particularly for optoelectronic modules and method of its fabrication
Système d'attache d'une bille dans un tube métallique particulièrement pour des modules optoélectroniques et méthode de sa fabrication

(30) Priorität: 31.03.1988 DE 3811032
(43) Veröffentlichungstag der Anmeldung: 18.10.1989
(73) Patentinhaber: SIEMENS AKTIENGESELLSCHAFT, 80333 München (DE)
(72) Erfinder: Althaus, Hans-Ludwig, Dr., D-8411 Lappersdorf (DE); Greil, Andreas, Dipl.-Phys., D-8000 München (DE)

(56) Entgegenhaltungen:
- EP-A- 0 191 328
- PATENT ABSTRACTS OF JAPAN, Band 10, Nr. 327 (P-513)[2383], 7. November 1986, Seite 165 P 513;& JP-A-61 134 709
- PATENT ABSTRACTS OF JAPAN, Band 5, Nr. 19 (E-44)[691], 4. Februar 1981, Seite 52 E 44;& JP-A-55 146 986
- PATENT ABSTRACTS OF JAPAN, Band 7, Nr. 2 (P-166)[1147], 7. Januar 1983, Seite 18 P 166;& JP-A-57 161 818
- PATENT ABSTRACTS OF JAPAN, Band 9, Nr. 68 (P-344)[1791], 28. März 1985;& JP-A-59 201 005

## Beschreibung

Die Erfindung betrifft eine Halterung mit einer Kugellinse in einem Metallröhrchen für optoelektronische Module und ein Verfahren zu ihrer Herstellung.

Aus der EP-A-0 191 328 ist ein optoelektronischer Modul mit einer Halterung mit einer Kugellinse bekannt, bei dem ein Ring auf die Kugellinse aufgeschrumpft ist. Dieser Ring, der mehrschichtig sein kann, besteht allerdings zumindest im Bereich der Verwachsungszone von Ring und Kugellinse aus Glas.

Bei elektro-optischen Wandlermodulen für die optische Nachrichtentechnik werden in zunehmendem Maße Freistrahloptiken (z.B. Kugellinsen) für die Einkopplung der Lichtleistung vom optischen Sender in eine Lichtwellenleiter-Faser und von der Lichtwellenleiter-Faser auf den optischen Empfänger verwendet.

Zu diesem Zweck müssen die optisch abbildenden Elemente, in diesem Fall Kugellinsen, mechanisch stabil gehaltert werden.

Epoxyfreiheit in den Wandlermodulen verbietet den Einsatz eines Klebers zum Befestigen der Kugellinsen. In dem Fall, daß die Halterung der Kugellinse im Modul erfolgt, muß die Befestigungsart nicht hermetisch dicht sein.

Es wurden bisher mehrere Verfahren zur Halterung von Kugellinsen entwickelt und auch kommerziell angewendet:
Beispielsweise wird die Kugellinse am Äquator metallisiert und in die Metallhalterung hermetisch dicht, flußmittelfrei eingelötet.

Eine andere Technik besteht darin, die Kugellinse mit einem geeigneten Glaslot in eine Metallhalterung hermetisch dicht einzuglasen.

Es ist auch bereits vorgeschlagen worden, die Kugellinse in durch anisotropes Ätzen hergestellte Vertiefungen mit Glaslot auf Silizium aufzuglasen.

Diese bekannten Halterungen sind allerdings relativ aufwendig in ihrer Herstellung bzw. anwendungsbedingt kompliziert aufgebaut.

Der Erfindung liegt die Aufgabe zugrunde, eine Halterung mit einer Kugellinse in einem Metallröhrchen für optoelektronische Module sowie ein Verfahren zu ihrer Herstellung zu schaffen, das nicht nur einfach durchführbar, mit wenig Aufwand verbunden und daher kostengünstig ist, sondern eine ökonomische Serienfertigung von Kugellinsenhalterungen ermöglicht, die sich durch hohe mechanische Stabilität bei einfachem Aufbau auszeichnen.

Diese Aufgabe wird erfindungsgemäß durch eine Halterung mit einer Kugellinse mit den Merkmalen des Anspruchs 1 bzw. eine Fertigungstechnik mit den Merkmalen des Anspruchs 5 gelöst.

Vorteilhafte Ausgestaltungen bzw. Weiterbildungen der Erfindung sind Gegenstand zusätzlicher Ansprüche.

Die erfindungsgemäße Halterung mit einer Kugellinse beruht auf der unterschiedlichen Wärmeausdehnung von Glas und Metall. Das Metall muß dabei einen größeren Wärmeausdehnungskoeffizienten als das Glas besitzen. Es werden dünnwandige Metallröhrchen mit einem kleineren Innendurchmesser als der Durchmesser der Kugellinse hergestellt. Das Metallröhrchen wird mit der Öffnung nach oben auf eine Unterlage gestellt. Die Kugellinse setzt man auf die Öffnung des Röhrchens. Durch eine Erwärmung des Metallröhrchens und der Kugellinse bis höchstens auf die Transformationstemperatur des Glases der Kugellinse dehnt sich das Metallröhrchen so aus, daß die Kugellinse in das Metallröhrchen paßt. Die anschließende Abkühlung auf Raumtemperatur schafft eine mechanisch stabile Verbindung der Kugellinse mit dem Metall. Der Äquator der Kugellinse kann dabei statt unterhalb oder in Höhe auch etwas oberhalb dem Ende des Metallröhrchens sein. Der gute Sitz der Kugellinse ist damit auch gewährleistet. Das Einbringen der Kugellinse in das Metallröhrchen kann gemäß einer Weiterbildung der Erfindung auch dadurch geschehen, daß das Metallröhrchen federnd gestaltet ist und die Kugellinse mit einer entsprechenden Kraft eingedrückt wird und "kalt" einrastet.

Eine weitere Ausgestaltung der Erfindung besteht darin, daß das Metallröhrchen mit geringfügig kleinerem Durchmesser als die Kugellinse auf Zimmertemperatur, d.h. kalt belassen oder auf ca. 600°C erhitzt wird und über eine auf Zimmertemperatur befindliche oder kältere Kugellinse gepreßt wird, so daß sich das Metallröhrchen über der Kugellinse aufweitet und diese über dem Äquator fest umschließt oder beim Abkühlen mit dem entsprechenden Schrumpf fest einschließt.

Die mit der Erfindung erzielten Vorteile bestehen insbesondere darin, daß die erfindungsgemäße Halterung einer Kugellinse mechanisch stabil und frei von jeglichen Verbindungshilfsmitteln wie Metallisierungen, Loten, Glasloten, Klebern, insbesondere organischen Klebern und dergleichen ist. Die Halterung ist billig herstellbar und vielseitig verwendbar und insbesondere für den Einsatz in optoelektronischen Wandlermodulen geeignet.

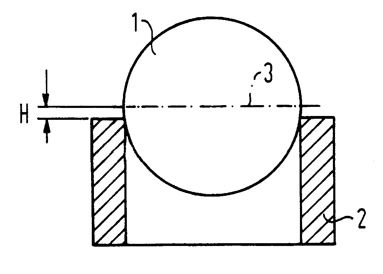

Anhand eines in der Figur der Zeichnung dargestellten, bevorzugten Ausführungsbeispiels wird die Erfindung weiter erläutert.

Die in der Figur im Schnitt dargestellte Kugellinsenhalterung besteht aus dem dünnwandig ausgebildeten Metallröhrchen 2 aus einem Material, dessen wärmeausdehnungskoeffizient höher als der des optischen Glases der Kugellinse 1 ist. Der Innendurchmesser des Metallröhrchens 2, das vorzugsweise aus einer Ni-Fe- pder Ni-Fe-Co-Legierung besteht, ist kleiner als der Außendurchmesser der Kugellinse 1. Durch Erwärmen des Metallröhrchens 2 und der Kugellinse 1 auf höchstens Transformationstemperatur des Glases der Kugellinse 1 dehnt sich das Metallröhrchen 2 so aus, daß die Kugellinse 1 in das Metallröhrchen 2 paßt. In diesem Beispiel befindet sich der Äquator 3 der Kugellinse 1 etwas oberhalb das Metallröhrchens 2,und zwar in einem Abstand H oberhalb der Stirnfläche des Metallröhrchens 2. Die anschließende Abkühlung sorgt für die mechanisch stabile Preßpassung der Kugellinse 1 durch Anschrumpfen des Metallröhrchens 2.

## Patentansprüche

1. Halterung zur Verwendung in optoelektronischen Modulen, welche aus einem Metallröhrchen und einer damit gefaßten Kugellinse besteht, **dadurch gekennzeichnet**, daß das Metallröhrchen (2) aus einem Material besteht, dessen Wärmeausdehnungskoeffizient größer als der des Glases der Kugellinse (1) ist, und daß der Innendurchmesser des Metallröhrchens (2) kleiner als der Durchmesser der Kugellinse (1) ist, so daß die Kugellinse (1) in dem Metallröhrchen (2) oder an dessen innerer Stirnkante durch Preßpassung befestigt ist.

2. Halterung nach Anspruch 1, **dadurch gekennzeichnet**, daß die Preßpassung eine Ein- bzw. Anschrumpfung ist.

3. Halterung nach Anspruch 1, **dadurch gekennzeichnet**, daß die Preßpassung durch Eindrücken der Kugellinse (1) in das Metallröhrchen (2) erfolgt ist.

4. Halterung nach einem der Ansprüche 1 bis 3, **dadurch gekennzeichnet**, daß das Metallröhrchen (2) aus einer Ni-Fe- oder Ni-Fe-Co-Legierung besteht.

5. Verfahren zum Herstellen einer Halterung nach Anspruch 1, **dadurch gekennzeichnet**, daß das Metallröhrchen (2) aus einem Material besteht, dessen Wärmeausdehnungskoeffizient größer als der des Glases der Kugellinse (1) ist, daß der Innendurchmesser des Metallröhrchens (2) kleiner als der Durchmesser der Kugellinse (1) ist, daß die Kugellinse (1) auf die innere Stirnkante des Metallröhrchens (2) aufgesetzt wird, daß das Metallröhrchen (2) und die Kugellinse (1) auf höchstens die Transformationstemperatur des Glases der Kugellinse (1) erhitzt werden, daß die Kugellinse (1) an eine vorgegebene Stelle des Metallröhrchens (2) gebracht wird, und daß die Halterung anschließend abgekühlt wird.

6. Verfahren zum Herstellen einer Halterung nach Anspruch 1, **dadurch gekennzeichnet**, daß das Metallröhrchen (2) aus einem Material besteht, dessen Wärmeausdehnungskoeffizient größer als der des Glases der Kugellinse (1) ist, daß der Innendurchmesser des Metallröhrchens (2) kleiner als der Durchmesser der Kugellinse (1) ist, und daß die kalte Kugellinse (1) an der inneren Stirnkante in das kalte Metallröhrchen (2) oder das auf eine Temperatur von ungefähr 600°C erhitzte Metallröhrchen (2) eingepreßt wird, wobei das Metallröhrchen (2) so verformt wird, daß es die Kugellinse (1) am Äquator (3) umschließt und festpreßt.

## Claims

1. Mounting for use in optoelectronic modules, which mounting comprises a metal tubule and a ball lens gripped thereby, characterized in that the metal tubule (2) comprises a material, the coefficient of thermal expansion of which is greater than that of the glass of the ball lens (1), and in that the internal diameter of the metal tubule (2) is smaller than the diameter of the ball lens (1), so that the ball lens (1) is secured by press fitting in the metal tubule (2) or at its internal front edge.

2. Mounting according to Claim 1, characterized in that the press fitting is a shrinking-in or shrinking-on.

3. Mounting according to Claim 1, chracterized in that the press fitting has taken place by pressing the ball lens (1) into the metal tubule (2).

4. Mounting according to one of Claims 1 to 3, characterized in that the metal tubule (2) comprises an Ni-Fe or Ni-Fe-Co alloy.

5. Method for producing a mounting according to Claim 1, characterized in that the metal tubule (2) comprises a material, the coefficient of thermal expansion of which is greater than that of the glass of the ball lens (1), in that the internal diameter of the metal tubule (2) is smaller than the diameter of the ball lens (1) in that the ball lens (1) is fitted onto the internal front edge of the metal tubule (2), in that the metal tubule (2) and the ball lens (1) are heated to at most the transformation temperature of the glass of the ball lens (1), in that the ball lens (1) is brought to a predetermined position of the metal tubule (2), and in that the mounting is subsequently cooled.

6. Method for producing a mounting according to Claim 1, characterized in that the metal tubule (2) comprises a material, the coefficient of thermal expansion of which is greater than that of the glass of the ball lens (1), in that the internal diameter of the metal tubule (2) is smaller than the diameter of the ball lens (1) and in that the cold ball lens (1) is pressed, at the internal front edge, into the cold metal tubule (2) or the metal tubule (2) heated to a temperature of approximately 600°C, the metal tubule (2) being deformed so that it encloses and firmly presses the ball lens (1) at the equator (3).

## Revendications

1. Dispositif de retenue destiné à être utilisé dans des modules optoélectroniques et qui est constitué d'un petit tube métallique et d'une lentille sphérique enserrée par ce tube, caractérisé par le fait que le petit tube métallique (2) est en un matériau, dont le coefficient de dilatation thermique est supérieur à celui du verre de la lentille sphérique (1), et que le diamètre intérieur du petit tube métallique (2) est inférieur au diamètre de la lentille sphérique (1) de sorte que cette dernière est fixée, par ajustement serré, dans le petit tube métallique (2) ou sur le bord frontal intérieur de ce petit tube.

2. Dispositif de retenue suivant la revendication 1, caractérisé par le fait que l'ajustement serré est une contraction appliquée intérieurement ou extérieurement.

3. Dispositif de retenue suivant la revendication 1, caractérisé par le fait que l'ajustement serré est réalisé par enfoncement de la lentille sphérique (1) dans le petit tube métallique (2).

4. Dispositif de retenue suivant l'une des revendications 1 à 3, caractérisé par le fait que le petit tube métallique (2) est en un alliage Ni-Fe ou Ni-Fe-Co.

5. Procédé de fabrication d'un dispositif de retenue selon la revendication 1, caractérisé en ce que le petit tube métallique (2) est en un matériau, dont le coefficient de dilatation thermique est supérieur à celui du verre de la lentille sphérique (1), que le diamètre intérieur du petit tube métallique (2) est inférieur au diamètre de la lentille sphérique (1), qu'on applique la lentille sphérique (1) contre le bord frontal intérieur du petit tube métallique (2), qu'on chauffe le petit tube métallique (2) et la lentille sphérique (1) au maximum à la température de transformation du verre de la lentille sphérique (1), qu'on met en place la lentille sphérique (1) en un emplacement prédéterminé du petit tube métallique (2), et qu'on refroidit ensuite le dispositif de retenue.

6. Procédé de fabrication un dispositif de retenue suivant la revendication 1, caractérisé par le fait que le petit tube métallique (2) est en un matériau dont le coefficient de dilatation thermique est supérieur à celui du verre de la lentille sphérique (1), que le diamètre intérieur du petit tube métallique (2) est inférieur au diamètre de la lentille sphérique (1), et qu'on enfonce la lentille sphérique (1) froide contre le bord frontal intérieur, à l'intérieur du petit tube métallique (2) froid ou qu'on enfonce le petit tube métallique (2) chauffé à une température d'environ 600°C, le petit tube métallique (2) se déformant de telle sorte qu'il enserre et serre fermement la lentille sphérique (1) dans sa zone équatoriale (3).
